(19) Europäisches Patentamt
European Patent Office
Office européen des brevets

(11) **EP 4 786 415 A1**

(12) **EUROPEAN PATENT APPLICATION**
published in accordance with Art. 153(4) EPC

(43) Date of publication:
**05.08.2026 Bulletin 2026/32**

(21) Application number: **24869743.5**

(22) Date of filing: **15.05.2024**

(51) International Patent Classification (IPC):
*C01B 25/45* $^{(2006.01)}$  *H01M 4/04* $^{(2006.01)}$
*H01M 4/58* $^{(2010.01)}$  *H01M 4/62* $^{(2006.01)}$
*H01M 10/0525* $^{(2010.01)}$

(52) Cooperative Patent Classification (CPC):
Y02E 60/10

(86) International application number:
**PCT/CN2024/093457**

(87) International publication number:
**WO 2025/066177 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311263779**

(71) Applicant: **SVOLT Energy Technology Co., Ltd.
Changzhou, Jiangsu 213200 (CN)**

(72) Inventors:
• **PAN, Yunpeng
Changzhou, Jiangsu 213200 (CN)**

• **CUI, Junyan
Changzhou, Jiangsu 213200 (CN)**
• **BAI, Yan
Changzhou, Jiangsu 213200 (CN)**
• **LI, Zitan
Changzhou, Jiangsu 213200 (CN)**
• **WANG, Tao
Changzhou, Jiangsu 213200 (CN)**
• **YANG, Hongxin
Changzhou, Jiangsu 213200 (CN)**

(74) Representative: **Michalski Hüttermann & Partner
mbB
Kaistraße 16A
40221 Düsseldorf (DE)**

(54) **PREPARATION METHOD FOR LITHIUM IRON PHOSPHATE POSITIVE ELECTRODE MATERIAL, POSITIVE ELECTRODE MATERIAL AND BATTERY**

(57) Provided in the present application are a preparation method for a lithium iron phosphate positive electrode material, a positive electrode material and a battery. The preparation method comprises: (I) mixing an iron phosphate precursor, a lithium source, a dopant, a carbon source and a solvent to obtain a dispersion; (I1) subjecting the dispersion to wet grinding to obtain an intermediate material; and (III) sequentially subjecting the intermediate material to a calcination treatment and a crushing treatment to obtain a lithium iron phosphate positive electrode material. In the present application, the compaction density of the positive electrode material and the electrochemical performance are improved by controlling the sanding particle size, the sintering temperature and the particle size distribution of lithium iron phosphate particles.

EP 4 786 415 A1

**Description**

**CROSS REFERENCE TO RELATED APPLICATION**

The present disclosure claims priority to Chinese Patent Application No. 202311263779.1, filed with the China National Intellectual Property Administration on September 27, 2023, which is incorporated herein by reference in entirety.

**TECHNICAL FIELD**

The present disclosure belongs to the technical field of positive electrode material preparations, and relates to a preparation method for lithium iron phosphate positive electrode material, a positive electrode material and a battery.

**BACKGROUND ART**

In recent years, the energy storage market has flourished. Energy storage batteries using lithium iron phosphate as a positive electrode material have attracted increasing attention due to their advantages such as long service life, good safety performance, high temperature resistance, large capacity, no memory effect, and environmental friendliness. However, with an ever-increasing demand for energy storage capacity, energy density requirements for lithium iron phosphate energy storage batteries are becoming increasingly stringent.

CN104766973A discloses a lithium iron phosphate used in high-performance lithium-ion batteries and a preparation method thereof, including the following steps: (1) preparation of a lithium iron phosphate precursor solution; (2) preparation of an electrospinning solution; (3) preparation of lithium iron phosphate precursor/polymer composite nanofibers; and (4) preparation of lithium iron phosphate nanofibers. The prepared lithium iron phosphate positive electrode material has a smooth surface, exhibits a nanofiber network distribution, and has characteristics, such as high gravimetric capacity and high initial coulombic efficiency, which is particularly suitable for requirements of high-energy-density batteries for positive electrode materials. CN116002652A discloses a lithium iron phosphate using iron phosphate and lithium phosphate and a preparation method thereof. The preparation method involves mixing iron phosphate, phosphoric acid, and lithium phosphate, adding an ethanol solution for multi-stage mixing and grinding, and then performing spray drying to obtain a precursor; and subjecting the precursor to a heat treatment under nitrogen protection to produce a lithium iron phosphate material.

Under a premise that all process conditions are consistent, the higher a compaction density of lithium iron phosphate is, the higher an energy density of a finished battery is. The compaction density of lithium iron phosphate is closely related to particle size distribution thereof and gradation. When the sizes of small particles (such as $D_1$ and $D_{10}$) or the overall particle size are too small, the contact area between the positive electrode material and the electrolyte is large, resulting in better discharge capacity, however, the compaction density is relatively low, and there are more side reactions, leading to gas generation in the cell and reducing cycling performance of the cell. When the sizes of large particles (e.g., $D_{50}$ and $D_{99}$) or the overall particles are too large, although the compaction density is high, it will lead to an excessively high DCR (DC internal resistance) and easily causes degradation in capacity and the cycling performance.

Therefore, by controlling appropriate sanding particle size and particle grading, the compaction density and the discharge capacity of a material can be balanced, thereby the energy density and the discharge capacity of the positive electrode material can be improved.

**SUMMARY**

The following is an overview of the subject matter described in detail herein. The overview is not intended to limit the scope of the claims.

In view of the shortcomings existing in the prior art, an objective of the present disclosure is to provide a station gate control system and a method. By controlling sanding particle size, sintering temperature and particle size distribution of lithium iron phosphate particles, the compaction density of the positive electrode material is enhanced, and the electrochemical performance is improved.

To achieve the objective, the present disclosure employs following technical solutions:

In the first aspect, the present disclosure provides a preparation method for lithium iron phosphate positive electrode material, and the preparation method includes:

(I) mixing an iron phosphate precursor, a lithium source, a dopant, a carbon source and a solvent to obtain a dispersion;
(II) subjecting the dispersion to wet grinding to obtain an intermediate material;
(III) sequentially subjecting the intermediate material to a calcination treatment and a crushing treatment to obtain a lithium iron phosphate positive electrode material;

wherein a grinding particle size of the wet grinding is $D_n$, a temperature of the calcination treatment is T, and particle sizes corresponding to cumulative volume distribution percentages of the lithium iron phosphate positive material reaching 1%, 10%, 50%, and 99% are $D_1$, $D_{10}$, $D_{50}$, and $D_{99}$, respectively, satisfying the following formula:

$$S = \frac{T}{D_n} \sqrt{\frac{D_{50} \times D_{99}}{D_1 \times D_{10}}}$$

wherein $11.0 \leq S \leq 13.3$.

In the present disclosure, $11.0 \leq S \leq 13.3$, and S can be, for example, 11.00, 11.14, 11.20, 11.30, 11.40, 11.50, 11.60, 11.80, 11.93, 12.00, 12.21, 12.33, 12.42, 12.55, 12.60, 12.85, 13.00, 13.15, 13.20, 13.25, 13.28, or 13.30, but is not limited to the listed values. Other unlisted values within the range are also applicable.

In the present disclosure, the dispersion of the iron phosphate precursor, the lithium source, the dopant, the carbon source and the solvent is sequentially subjected to wet grinding, a calcination treatment and a crushing treatment. By controlling the grinding particle size, the temperature of the calcination treatment, and the particle size distribution after the crushing treatment, the compaction density of the obtained positive electrode material is improved, resulting in a larger volumetric energy density when fabricated into an energy storage battery. Compared to traditional positive electrode materials, the side reactions between a cell and an electrolyte in a produced energy storage battery can be reduced, which is conducive to reducing gas generation, and the discharge specific capacity and cycling performance are effectively improved.

As an optional technical solution of the present disclosure, a molar ratio of the iron phosphate precursor to the lithium source is 1:(1-1.05), for example, the molar ratio can be 1:1, 1:1.01, 1:1.015, 1:1.02, 1:1.025, 1:1.03, 1:1.035, 1:1.04, 1:1.045, or 1:1.05, but is not limited to the listed values. Other unlisted values within the range are also applicable.

It should be noted that the present disclosure does not specifically limit the lithium source, and any lithium source known to those skilled in the art for preparing lithium iron phosphate batteries can be used. Exemplarily, the lithium source includes, but is not limited to, any one or a combination of at least two of $Li_2CO_3$, $Li_3PO_4$, and $LiNO_3$.

In an embodiment, the dopant includes any one or a combination of at least two of $TiO_2$, $WO_3$, and MgO.

In an embodiment, based on a total mass of the iron phosphate precursor, the lithium source, the dopant, and the carbon source, an addition amount of the dopant is 1,000 ppm-5,000 ppm, for example, the addition amount of the dopant can be 1,000 ppm, 1,200 ppm, 1,500 ppm, 2,000 ppm, 2,500 ppm, 2,800 ppm, 3,000 ppm, 3,500 ppm, 4,000 ppm, 4,300 ppm, 4,500 ppm, 4,800 ppm, or 5,000 ppm, but is not limited to the listed values. Other unlisted values within the range are also applicable.

In an embodiment, the carbon source includes glucose.

In an embodiment, taking the total mass of the iron phosphate precursor, the lithium source, the dopant, and the carbon source as 100%, an addition amount of the carbon source is 10wt%-15wt%. For example, the addition amount of the carbon source can be 10wt%, 10.5wt%, 11wt%, 11.5wt%, 12wt%, 12.5wt%, 13wt%, 13.5wt%, 14wt%, 14.5wt%, or 15wt%, but is not limited to the listed values. Other unlisted values within the range are also applicable.

In an embodiment, the solvent includes water.

In an embodiment, a solid content of the dispersion is 30%-50%, for example, the solid content of the dispersion can be 30%, 32%, 35%, 40%, 43%, 45%, 48%, or 50%, but is not limited to the listed values. Other unlisted values within the range are also applicable.

As an optional technical solution of the present disclosure, the wet grinding includes sand grinding.

In an embodiment, the grinding particle size $D_n$ of the wet grinding is 400 nm-600 nm. For example, the grinding particle size can be 400 nm, 420 nm, 430 nm, 450 nm, 495 nm, 500 nm, 510 nm, 550 nm, 580 nm, 598 nm, or 600 nm, but is not limited to the listed values. Other values within the range are also applicable.

In the present disclosure, when the grinding particle size of the wet grinding is too large, it can easily prevent sintered particles from growing, lead to an increase in the proportion of small particles, and thereby resulting in a relatively lower compaction density of a product, thus affecting the volumetric energy density. When the grinding particle size of the wet grinding is too small, the proportion of large particles is increased, which can easily hinder subsequent crushing work process, and the gradation after crushing is uncontrollable, leading to poor consistency of a material.

It should be noted that, in the present disclosure, the large particles refer to material particles corresponding to a cumulative volume distribution percentage of 50% or greater for the lithium iron phosphate positive electrode material, and the small particles refer to the material particles corresponding to a cumulative volume distribution percentage of 50% or less for the lithium iron phosphate positive electrode material.

As an optional technical solution of the present disclosure, in step (II), after the wet grinding is completed, the intermediate material is subjected to a drying treatment.

In an embodiment, the drying treatment includes spray drying.

In an embodiment, a pressure of the spray drying is 0.1 MPa-0.5 MPa. For example, the pressure can be 0.1 MPa, 0.15 MPa, 0.18 MPa, 0.2 MPa, 0.25 MPa, 0.3 MPa, 0.35 MPa, 0.38 MPa, 0.4 MPa, 0.45 MPa, 0.47 MPa, or 0.5 MPa, but is not limited to the listed values. Other values within the range are also applicable.

In an embodiment, optionally, a temperature of the spray drying is 140 °C-190 °C. For example, the temperature can be 140 °C, 143 °C, 145 °C, 150 °C, 155 °C, 160 °C, 165 °C, 170 °C, 172 °C, 175 °C, 170 °C, 180 °C, 183 °C, 185 °C, 186 °C, 188 °C, or 190 °C, but is not limited to the listed values. Other values within the range are also applicable.

As an optional technical solution of the present disclosure, the calcination treatment includes: subjecting the intermediate material to microwave heating.

Compared to conventional box-type heating equipment that relies on heat conduction for heating, the present disclosure utilizes microwave heating to make the temperature of the sintered material at various positions in a graphite container consistent, which can prevent the formation of a temperature gradient within the material, thus ensuring consistency of a sintered product of lithium iron phosphate and significantly improving cycling stability of the product. Furthermore, compared to conventional box-type furnaces, microwave heating offers a faster heating rate, and can quickly reach the set temperature and significantly reduce the side reactions generated during a temperature climbing process. The present disclosure does not specify a particular restriction on a container used for holding the intermediate material during the microwave heating; any container well-known to those skilled in the art can be used, for example, a graphite saggar can be used.

In an embodiment, after the calcination treatment is completed, the intermediate material is subjected to a cooling treatment until reaching the room temperature, followed by the crushing treatment.

As an optional technical solution of the present disclosure, a temperature of the calcination treatment is 780 °C-850 °C, for example, the temperature of the calcination treatment can be 780 °C, 785 °C, 790 °C, 800 °C, 810 °C, 815 °C, 820 °C, 825 °C, 830 °C, 835 °C, 840 °C, 845 °C, or 850 °C, but is not limited to the listed values. Other unlisted values within the range are also applicable.

In the present disclosure, the temperature of the calcination treatment is controlled within a reasonable range. On the one hand, it can prevent the sintered particles from failing to grow due to an excessively low calcination temperature, which would result in an increased proportion of the small particles, thereby lead to a relatively lower compaction density of the finished product, affecting the volumetric energy density. On the other hand, it can prevent the particles from continuously growing due to an excessively high calcination temperature. Although the compaction density increases, the proportion of the large particles increases, which can easily hinder the subsequent crushing work process, and the gradation after the crushing is uncontrollable, leading to poor consistency of a material.

In an embodiment, a duration of the calcination treatment is 8 h-12 h. For example, the duration of the calcination treatment can be 8 h, 8.5 h, 9 h, 9.5 h, 10 h, 10.5 h, 11 h, 11.5 h or 12 h, but it is not limited to the listed values. Other unlisted values within the range are also applicable.

In an embodiment, the calcination treatment of the intermediate material is performed under a protection of a protective atmosphere.

In an embodiment, the protective atmosphere includes nitrogen.

In an embodiment, a concentration of oxygen in the protective atmosphere is < 50 ppm.

As an optional technical solution of the present disclosure, the crushing treatment comprises air jet milling.

In an embodiment, a pressure of the air jet milling is 0.8 MPa-0.9 MPa. For example, the pressure of the air jet milling can be 0.8 MPa, 0.81 MPa, 0.82 MPa, 0.83 MPa, 0.84 MPa, 0.85 MPa, 0.86 MPa, 0.87 MPa, 0.88 MPa, 0.89 MPa or 0.9 MPa, but is not limited to the listed values. Other unlisted values within the range are also applicable.

In an embodiment, the particle size $D_1$ of the lithium iron phosphate positive electrode material is 0.1 μm-0.3 μm, and not 0.3 μm. For example, the particle size $D_1$ can be 0.1 μm, 0.11 μm, 0.13 μm, 0.15 μm, 0.16 μm, 0.18 μm, 0.2 μm, 0.22 μm, 0.23 μm, 0.24 μm, 0.25 μm, 0.26 μm, 0.27 μm, 0.28 μm or 0.29 μm, but is not limited to the listed values. Other unlisted values within the range are also applicable.

In an embodiment, the particle size $D_{10}$ of the lithium iron phosphate positive electrode material is 0.3 μm-0.5 μm. For example, the particle size $D_{10}$ can be 0.3 μm, 0.33 μm, 0.35 μm, 0.37 μm, 0.38 μm, 0.39 μm, 0.4 μm, 0.42 μm, 0.45 μm, 0.47 μm, 0.48 μm or 0.5 μm, but is not limited to the listed values. Other unlisted values within the range are also applicable.

In an embodiment, the particle size $D_{50}$ of the lithium iron phosphate positive electrode material is 0.8 μm-1.2 μm. For example, the particle size $D_{50}$ can be 0.8 μm, 0.82 μm, 0.85 μm, 0.87 μm, 0.89 μm, 0.9 μm, 0.92 μm, 0.93 μm, 0.94 μm, 0.95 μm, 0.98 μm, 1 μm, 1.05 μm, 1.08 μm, 1.1 μm, 1.12 μm, 1.15 μm, 1.18 μm, 1.19 μm or 1.2 μm, but is not limited to the listed values. Other unlisted values within the range are also applicable.

In an embodiment, the particle size $D_{99}$ of the lithium iron phosphate positive electrode material is 5 μm-10 μm.

For example, the particle size $D_{99}$ can be 5 μm, 5.2 μm, 5.5 μm, 5.7 μm, 6 μm, 6.2 μm, 6.5 μm, 6.7 μm, 7 μm, 7.14 μm, 7.25 μm, 7.26 μm, 7.5 μm, 7.9 μm, 7.99 μm, 8 μm, 8.5 μm, 8.7 μm, 9 μm, 9.5 μm, 9.7 μm, 9.85 μm, 9.9 μm or 10 μm, but is not limited to the listed values. Other unlisted values within the range are also applicable.

In the second aspect, the present disclosure provides a positive electrode material, and the positive electrode material is prepared by the preparation method in the first aspect.

As an optional technical solution of the present disclosure, the compaction density of the positive electrode material is 2.1 $g/cm^3$-2.5 $g/cm^3$. For example, the compaction density can be 2.1 $g/cm^3$, 2.12 $g/cm^3$, 2.15 $g/cm^3$, 2.2 $g/cm^3$, 2.22 $g/cm^3$, 2.25 $g/cm^3$, 2.28 $g/cm^3$, 2.3 $g/cm^3$, 2.35 $g/cm^3$, 2.38 $g/cm^3$, 2.4 $g/cm^3$, 2.42 $g/cm^3$, 2.45 $g/cm^3$, 2.48 $g/cm^3$, or 2.5 $g/cm^3$, but is not limited to the listed values. Other unlisted values within the range are also applicable.

In the third aspect, the present disclosure provides a battery, a positive electrode of the battery includes the positive electrode material in the second aspect.

The positive electrode of the battery in the present disclosure typically includes an aluminum foil well known to those skilled in the art, and an active material layer coated on at least one side surface of the aluminum foil. The active material layer is composed of a conductive agent, a binder, and the above positive electrode material mixed in a certain mass ratio, wherein the conductive agent includes, but is not limited to, conductive carbon black, carbon nanotube, and acetylene black; and the binder includes, but is not limited to, carboxymethyl cellulose, hydroxypropyl cellulose, polyvinylpyrrolidone, styrene-butadiene rubber, or fluororubber, etc.

Numerical ranges in the present disclosure include not only the point values listed above, but also any point values within the above numerical ranges that have not been listed. Due to space limitations and for the sake of brevity, the present disclosure will not exhaustively list all the specific point values included in the ranges.

Compared with the prior art, the present disclosure has following beneficial effects:

The present disclosure provides a preparation method for lithium iron phosphate positive electrode material, a positive electrode material and a battery. A dispersion of an iron phosphate precursor, a lithium source, a dopant, a carbon source and a solvent is sequentially subjected to wet grinding, calcination treatment and crushing treatment. By controlling the grinding particle size, the temperature of the calcination treatment, and the particle size distribution after the crushing treatment, the compaction density of the obtained positive electrode material is improved, resulting in a higher volumetric energy density when manufacturing an energy storage battery. Compared to traditional positive electrode materials, the side reactions between cell and electrolyte solution in a manufactured energy storage battery can be reduced, which is conducive to reducing gas generation, and effectively improving discharge specific capacity and cycling performance.

After reading and understanding the detailed description, other aspects can be understood.

## DETAILED DESCRIPTION OF EMBODIMENTS

The technical solution of the present disclosure will be further described below through specific embodiments.

In a specific embodiment, the present disclosure provides a preparation method for lithium iron phosphate positive electrode material, and the preparation method includes:

(I) mixing an iron phosphate precursor, a lithium source, a dopant, a carbon source and a solvent to obtain a dispersion with a solid content of 30%-50%;

(I1) subjecting the dispersion to wet grinding to obtain an intermediate material, wherein a grinding particle size $D_n$ of the wet grinding is 400 nm-600 nm; and

(III) sequentially subjecting the intermediate material to a drying treatment, a calcination treatment and a crushing treatment to obtain a lithium iron phosphate positive electrode material.

A grinding particle size of the wet grinding is $D_n$, a temperature of the calcination treatment is T, and particle sizes corresponding to cumulative volume distribution percentages of the lithium iron phosphate positive material reaching 1%, 10%, 50%, and 99% are $D_1$, $D_{10}$, $D_{50}$, and $D_{99}$, respectively, satisfying the following formula:

$$S = \frac{T}{D_n} \sqrt{\frac{D_{50} \times D_{99}}{D_1 \times D_{10}}}$$

wherein, $11.0 \leq S \leq 13.3$.

In some specific embodiments, a molar ratio of the iron phosphate precursor to the lithium source is 1:(1-1.05). The lithium source includes any one or a combination of at least two of $Li_2CO_3$, $Li_3PO_4$, and $LiNO_3$. The dopant includes any one or a combination of at least two of $TiO_2$, $WO_3$, and $MgO$. The carbon source includes glucose. The solvent includes water. Taking the total mass of the iron phosphate precursor, the lithium source, the dopant, and the carbon source as 100%, an addition amount of the carbon source is 10 wt%-15 wt%; and based on a total mass of the iron phosphate precursor, the lithium source, the dopant, and the carbon source, an addition amount of the dopant is 1,000 ppm-5,000 ppm.

In some embodiments, the wet grinding includes wetting sand grinding.

In some embodiments, the drying treatment includes spray drying, a pressure of the spray drying is 0.1 MPa-0.5 MPa, and a temperature of the spray drying is 140 °C-190 °C

In some embodiments, the calcination treatment includes: subjecting the intermediate material to microwave heating.

In some embodiments, a temperature of the calcination treatment is 780 °C-850 °C, and a duration of the calcination treatment is 8 h-12 h.

In some embodiments, after the calcination treatment is completed, the intermediate material is subjected to a cooling treatment until reaching the room temperature, followed by the crushing treatment.

In some embodiments, the calcination treatment of the intermediate material is performed under a protection of a protective atmosphere, the protective atmosphere includes nitrogen, and an oxygen concentration in the protective atmosphere is < 50 ppm.

In some embodiments, the crushing treatment includes air jet milling, and a pressure of the air jet milling is 0.8 MPa-0.9 MPa.

In some embodiments, the particle size $D_1$ of the lithium iron phosphate positive electrode material is 0.1 $\mu$m-0.3 $\mu$m, and not 0.3 $\mu$m; the particle size $D_{10}$ of the lithium iron phosphate positive electrode material is 0.3 $\mu$m-0.5 $\mu$m; the particle size $D_{50}$ of the lithium iron phosphate positive electrode material is 0.8 $\mu$m-1.2 $\mu$m; and the particle size $D_{99}$ of the lithium iron phosphate positive electrode material is 5 $\mu$m-10 $\mu$m.

In another specific embodiment, the present disclosure provides a positive electrode material, and the positive electrode material is prepared using a preparation method in a specific embodiment. A compaction density of the positive electrode material is 2.1g/cm$^3$-2.5 g/cm$^3$.

In another specific embodiment, the present disclosure provides a battery, the positive electrode of the battery includes a positive electrode material in another specific embodiment. The positive electrode of the battery in the present disclosure typically includes an aluminum foil well known to those skilled in the art, and an active material layer coated on at least one side surface of the aluminum foil. The active material layer is composed of a conductive agent, a binder, and the above positive electrode material mixed in a certain mass ratio. The conductive agent includes, but is not limited to, conductive carbon black, carbon nanotube, and acetylene black; and the binder includes, but is not limited to, carboxymethyl cellulose, hydroxypropyl cellulose, polyvinylpyrrolidone, styrene-butadiene rubber, or fluororubber, etc.

In following examples, the addition amounts of various material are based on the total mass of the iron phosphate precursor, the lithium source, the dopant, and the carbon source. For example, the total mass of the iron phosphate precursor, the lithium source, the dopant and the carbon source is taken as 100%, the addition amount of glucose is 10 wt%-15 wt%, and based on the total mass of the iron phosphate precursor, the lithium source, the dopant, and the carbon source, the addition amount of TiO$_2$ is 1,000 ppm-5,000 ppm.

Example 1

The present example provided a preparation method for lithium iron phosphate positive electrode material, specifically including following steps:

(1) FePO$_4$ precursor and Li$_2$CO$_3$ were mixed at a molar ratio of 1:1.015, and 1,500 ppm TiO$_2$ and 12 wt% glucose were sequentially added to obtain a dispersion with a solid content of 40%;
(2) the dispersion was subjected to wet grinding to obtain an intermediate material, wherein the grinding particle size $D_n$ of the wet grinding was 500 nm, and the intermediate material was collected and subjected to spray drying at a pressure of 0.2 MPa and a temperature of 180 °C;
(3) the intermediate material after spray drying was placed in a graphite saggar for microwave heating. By adjusting microwave frequency, the temperature T was controlled at 820 °C, a calcination treatment was performed for 12 h in a nitrogen atmosphere (oxygen concentration < 50 ppm); and
(4) subsequently, a cooling treatment was performed until the room temperature was reached, and then air jet milling was performed under a pressure of 0.88 MPa to obtain a lithium iron phosphate positive electrode material.

Example 2

The present example provided a preparation method for lithium iron phosphate positive electrode material, specifically including following steps:

(1) FePO$_4$ precursor and Li$_2$CO$_3$ were mixed at a molar ratio of 1:1.015, and 1,500 ppm TiO$_2$ and 12 wt% glucose were sequentially added to obtain a dispersion with a solid content of 40%;

(2) the dispersion was subjected to wet grinding to obtain an intermediate material, wherein the grinding particle size $D_n$ of the wet grinding is 600 nm, and the intermediate material was collected and subjected to spray drying at a pressure of 0.15 MPa and a temperature of 185 °C.

(3) the intermediate material after spray drying was placed in a graphite saggar for microwave heating. By adjusting microwave frequency, the temperature T was controlled at 830 °C. a calcination treatment was performed for 12 h in a nitrogen atmosphere (oxygen concentration < 50 ppm); and

(4) subsequently, a cooling treatment was performed until the room temperature was reached, and then air jet milling was performed under a pressure of 0.85 MPa to obtain a lithium iron phosphate positive electrode material.

Example 3

The present example provided a preparation method for lithium iron phosphate positive electrode material, specifically including following steps:

(1) $FePO_4$ precursor and $Li_2CO_3$ were mixed at a molar ratio of 1:1, and 1,000 ppm $WO_3$ and 14 wt% glucose were sequentially added to obtain a dispersion with a solid content of 30%;

(2) the dispersion was subjected to wet grinding to obtain an intermediate material, wherein the grinding particle size $D_n$ of the wet grinding was 495 nm, and the intermediate material was collected and subjected to spray drying at a pressure of 0.3 MPa and a temperature of 170 °C;

(3) the intermediate material after spray drying was placed in a graphite saggar for microwave heating. By adjusting microwave frequency, the temperature T was controlled at 825 °C. and a calcination treatment was performed for 11 h in a nitrogen atmosphere (oxygen concentration < 50 ppm); and

(4) subsequently, a cooling treatment was performed until the room temperature was reached, and then air jet milling was performed under a pressure of 0.8 MPa to obtain a lithium iron phosphate positive electrode material.

Example 4

The present example provided a preparation method for lithium iron phosphate positive electrode material, specifically including following steps:

(1) $FePO_4$ precursor and $Li_2CO_3$ were mixed at a molar ratio of 1:1.02, and 5,000 ppm MgO and 15 wt% glucose were sequentially added to obtain a dispersion with a solid content of 50%;

(2) the dispersion was subjected to wet grinding to obtain an intermediate material, wherein the grinding particle size $D_n$ of the wet grinding was 510 nm; the intermediate material was collected and subjected to spray drying at a pressure of 0.4 MPa and a temperature of 145 °C.

(3) the intermediate material after spray drying was placed in a graphite saggar for microwave heating. By adjusting microwave frequency, the temperature T was controlled at 830 °C, and a calcination treatment was performed for 10 h in a nitrogen atmosphere (oxygen concentration < 50 ppm); and

(4) subsequently, a cooling treatment was performed until the room temperature was reached, and then air jet milling was performed under a pressure of 0.9 MPa to obtain a lithium iron phosphate positive electrode material.

Example 5

The present example provided a preparation method for lithium iron phosphate positive electrode material, specifically including following steps:

(1) $FePO_4$ precursor and $Li_2CO_3$ were mixed at a molar ratio of 1:1.04, and 3,500 ppm mixture of $TiO_2$ and MgO, as well as 13 wt% glucose were sequentially added to obtain a dispersion with a solid content of 45%;

(2) the dispersion was subjected to wet grinding to obtain an intermediate material, wherein, the grinding particle size $D_n$ of the wet grinding was 598 nm, and the intermediate material was collected and subjected to spray drying at a pressure of 0.5 MPa and a temperature of 190 °C;

(3) the intermediate material after spray drying was placed in a graphite saggar for microwave heating. By adjusting microwave frequency, the temperature T was controlled at 835 °C, and calcination treatment was performed for 8 h in a nitrogen atmosphere (oxygen concentration < 50 ppm); and

(4) subsequently, a cooling treatment was performed until the room temperature was reached, and then air jet milling was performed under a pressure of 0.9 MPa to obtain a lithium iron phosphate positive electrode material.

Example 6

The present example provided a preparation method for lithium iron phosphate positive electrode material. The difference from Example 1 was that: the calcination treatment was carried out in a box-type heating furnace without microwave heating, while the remaining process parameters and operating conditions were the same as in Example 1.

Comparative Example 1

The present comparative example provided a preparation method for lithium iron phosphate positive electrode material. The difference from Example 1 was that: the grinding particle size $D_n$=400 nm, the temperature T of the calcination treatment was 780 °C, while the remaining process parameters and operating conditions were the same as in Example 1.

Comparative Example 2

The present comparative example provided a preparation method for lithium iron phosphate positive electrode material. The difference from Example 1 was that: the grinding particle size $D_n$=500 nm, the temperature T of the calcination treatment was 790 °C, while the remaining process parameters and operating conditions were the same as in Example 1.

Comparative Example 3

The present comparative example provided a preparation method for lithium iron phosphate positive electrode material. The difference from Example 1 was that: the grinding particle size $D_n$=600 nm, the temperature T of the calcination treatment was 800 °C, while the remaining process parameters and operating conditions were the same as in Example 1.

Comparative Example 4

The present comparative example provided a preparation method for lithium iron phosphate positive electrode material. The difference from Example 1 was that: the grinding particle size $D_n$=400 nm, the temperature T of the calcination treatment was 810 °C, while the remaining process parameters and operating conditions were the same as in Example 1.

Comparative Example 5

The present comparative example provided a preparation method for lithium iron phosphate positive electrode material. The difference from Example 1 was that: the grinding particle size $D_n$=600 nm, the temperature T of the calcination treatment was 840 °C, while the remaining process parameters and operating conditions were the same as in Example 1.

Comparative Example 6

The present comparative example provided a preparation method for lithium iron phosphate positive electrode material. The difference from Example 1 was that: the grinding particle size $D_n$=400 nm, the temperature T of the calcination treatment was 850 °C, while the remaining process parameters and operating conditions were the same as in Example 1.

Comparative Example 7

The present comparative example provided a preparation method for lithium iron phosphate positive electrode material. The difference from Example 1 was that: the grinding particle size $D_n$=500 nm, the temperature T of the calcination treatment was 860 °C, while the remaining process parameters and operating conditions were the same as in Example 1.

In Examples 1-6 and Comparative Examples 1-7 of the present disclosure, the particle sizes corresponding to cumulative volume distribution percentages of the obtained lithium iron phosphate positive material reaching 1%, 10%, 50%, and 99% are $D_1$, $D_{10}$, $D_{50}$, and $D_{99}$, respectively, specifically as shown in Table 1.

In the present disclosure, S is calculated according to following formula, wherein $D_n$ is the grinding particle size of the wet grinding (unit: nm), T is the temperature of the calcination treatment (unit: °C), and $D_1$, $D_{10}$, $D_{50}$ and $D_{99}$ are the particle sizes (unit: μm) corresponding to cumulative volume distribution percentage of the lithium iron phosphate positive material reaching 1%, 10%, 50% and 99%, respectively. Calculation results of S are shown in Table 1.

$$S = \frac{T}{D_n} \sqrt{\frac{D_{50} \times D_{99}}{D_1 \times D_{10}}}$$

Table 1

| Particle Size Distribution Number | $D_1(\mu m)$ | $D_{10}(\mu m)$ | $D_{50}(\mu m)$ | $D_{99}(\mu m)$ | S |
|---|---|---|---|---|---|
| Example 1 | 0.24 | 0.40 | 0.87 | 7.2 | 13.25 |
| Example 2 | 0.24 | 0.40 | 0.93 | 6.7 | 11.14 |
| Example 3 | 0.23 | 0.39 | 0.80 | 7.14 | 13.30 |
| Example 4 | 0.25 | 0.42 | 0.85 | 7.25 | 12.47 |
| Example 5 | 0.20 | 0.45 | 0.89 | 7.90 | 12.34 |
| Example 6 | 0.25 | 0.45 | 0.82 | 7.26 | 11.93 |

| | | | | | |
|---|---|---|---|---|---|
| Comparative Example 1 | 0.15 | 0.42 | 0.89 | 7.99 | 20.72 |
| Comparative Example 2 | 0.13 | 0.37 | 0.82 | 6.2 | 16.24 |
| Comparative Example 3 | 0.11 | 0.35 | 0.75 | 5.2 | 13.42 |
| Comparative Example 4 | 0.17 | 0.45 | 0.92 | 8.4 | 20.35 |
| Comparative Example 5 | 0.24 | 0.37 | 0.79 | 6.7 | 10.81 |
| Comparative Example 6 | 0.22 | 0.52 | 0.98 | 9.1 | 18.76 |
| Comparative Example 7 | 0.23 | 0.47 | 0.94 | 8.4 | 14.70 |

In the present disclosure, the lithium iron phosphate positive electrode materials obtained in Examples 1-6 and Comparative Examples 1-7 were used to fabricate pouch cells, and the compaction density, gas generation, and electrical performance tests were performed on the pouch cells.

Specific steps for fabricating pouch cells using the lithium iron phosphate positive electrode materials include:

① preparation of positive electrode sheet: a lithium iron phosphate positive electrode material, a conductive agent, and a binder were mixed uniformly in a mass ratio of 96:2:2. The mixture was then double-sided coated onto an aluminum foil (width × thickness = 163 mm × 0.012 mm), with a single-sided areal density of 18.05 mg/cm² (tolerance being ±0.36 mg/cm²). The coated aluminum foil was baked at 100 °C for 24 h, cut into sheets, and then rolled to a compaction density of 2.5g/cm³;

② preparation of negative electrode: a graphite, a conductive agent, and a binder were mixed uniformly in a mass ratio of 96:1:3. Deionized water was added as solvent and stirred uniformly. The mixture was then double-sided coated onto a copper foil (width × thickness = 153 mm × 0.006 mm), with a single-sided areal density of 9.04 mg/cm² (tolerance

being $\pm 0.18$ mg/cm$^2$). The coated copper foil was then vacuum-dried at 85 °C for 24 h;

③ a purchased electrolyte solution was injected.

④ assembly of pouch cell: 17 positive electrode sheets, 18 negative electrode sheets, and separators were assembled into a pouch cell sequentially through stacking, tab welding, case punching, sealing, electrolyte injection, pre-charging, aging, formation, aging again, and degassing.

Compaction Density Test

A compaction mold was assembled and a digital vernier caliper was used to measure the initial height $h_0$ and the diameter $\varphi$ of the mold. 1.0000g $\pm$ 0.0010g of a sample m to be messured was weighed using a weighing paper and poured into the compaction mold. After assembling, the mold was placed in the central position of the platform of a compaction density meter. The pressure unit of the compaction density meter was adjusted to tons. Pressure was manually applied to 2.00 T and held for 60 s, then released. The mold was removed, after zeroing the digital vernier caliper, the mold height $h_1$ was measured, data were recorded, and the compaction density was calculated using following formula. Results are shown in Table 2:

$$\text{Compaction density} = 4m/2\pi\varphi(h_1 - h_0)$$

(2) Gas Generation and Electrical Performance Test

After recording the initial cell volume using water displacement method, the cell was placed in 40°C constant-temperature chamber and subjected to 1C charge/1C discharge. After three cycles, the third 1C discharge capacity was recorded as the initial discharge capacity. Cycling was performed between 5-97% SOC until 1200 cycles and then the cycle was stopped. The discharge capacity at 1200 cycles was recorded. The gas generation volume and the cycle retention rate were tested. Results are shown in Table 2, where:

Gas generation volume per ampere-hour = (Cell volume at 1500 cycles - Initial cell volume) / Initial 1C discharge capacity; and Cycle retention rate = Discharge capacity at 1500 cycles / Initial discharge capacity $\times$ 100.

(3) The cycle retention rate was tested in a 40°C constant-temperature chamber under 1C charging/1C discharging, with cycling between 0-100% SOC for 1,500 cycles. Results are shown in Table 2.

Table 2

| Number | Compaction Density (g/cm$^3$) | 0.33 C Gravimetric Capacity (mAh/g) | Gas Generation after 1200 Cycles (mL/Ah) | Retention Rate after 1500 Cycles at 25°C (%) |
|---|---|---|---|---|
| Example 1 | 2.35 | 139.3 | 3.85 | 95.5 |
| Example 2 | 2.32 | 139.4 | 3.87 | 95.2 |
| Example 3 | 2.34 | 139.5 | 3.88 | 95.4 |
| Example 4 | 2.33 | 139.6 | 3.91 | 95.1 |
| Example 5 | 2.32 | 139.5 | 3.90 | 95.3 |
| Example 6 | 2.31 | 139.2 | 3.92 | 95.4 |
| Comparative Example 1 | 2.24 | 139.9 | 4.12 | 93.1 |
| Comparative Example 2 | 2.21 | 140.8 | 4.01 | 92.7 |
| Comparative Example 3 | 2.19 | 141.1 | 3.98 | 92.1 |
| Comparative Example 4 | 2.38 | 138.8 | 3.94 | 95.7 |
| Comparative Example 5 | 2.27 | 139.4 | 3.89 | 94.2 |
| Comparative Example 6 | 2.42 | 138.2 | 3.92 | 95.8 |

(continued)

| Number | Compaction Density (g/cm$^3$) | 0.33 C Gravimetric Capacity (mAh/g) | Gas Generation after 1200 Cycles (mL/Ah) | Retention Rate after 1500 Cycles at 25°C (%) |
|---|---|---|---|---|
| Comparative Example 7 | 2.38 | 138.9 | 3.90 | 95.3 |

As can be seen from Table 1 and Table 2, in Examples 1-6, by controlling the sanding particle size, the temperature of the sintering and the particle size distribution of the lithium iron phosphate particles, S is controlled to be within a range of $11 \leq S \leq 13.3$, effectively improving the compaction density of the positive electrode material, and improving overall electrochemical performance.

As can be seen from Table 1 and Table 2, compared to Example 1, the compaction density and the overall electrochemical performance of the battery in Example 6 were both reduced. This is mainly because the microwave heating treatment used in Example 1 can ensure the temperature of the sintering to be consistent at all positions of the material within a graphite container, and enable the material to be heated evenly, which is beneficial for improving cycling stability of the material and reducing an occurrence of side reactions, thus enhancing the electrochemical performance of a battery. As can be seen from Example 2 and Example 4, as the grinding particle size increases in the wet grinding, the overall particle size of the lithium iron phosphate positive electrode material decreases. This is mainly because the grinding particle size affects the extent of particle growth, and increasing the grinding particle size inhibits particle growth, resulting in a reduction in particle diameter.

From Example 1, Comparative Example 2, and Comparative Example 7, it is evident that the particle size of the lithium iron phosphate positive electrode material overall increases with increase in the temperature of the calcination. This is mainly because increased temperature promotes growth of material particles. By comparing Example 2, Comparative Example 3, and Comparative Example 6, a trend can also be observed that the overall particle size of the lithium iron phosphate positive electrode material increases with the increase of the temperature of the calcination.

By comparing Example 1 and Comparative Example 7, when the temperature of the calcination is too high, the particle size of the lithium iron phosphate positive electrode material overall increases, and the particle size distribution S exceeds the acceptable range. Although the compaction density increases, the 0.33 C gravimetric capacity decreases, which cannot meet the requirements of energy storage lithium iron phosphate batteries for battery capacity. By comparing Example 2 and Comparative Example 5, although the temperature of the calcination increases, when the particle sizes of $D_{10}$ and $D_{50}$ of the lithium iron phosphate positive electrode material significantly decrease, the particle size distribution S also exceeds the acceptable range. The compaction density and the cycle retention rate of the product decrease significantly, which cannot meet the requirements of energy storage lithium iron phosphate batteries for battery capacity.

By comparing Example 1 and Comparative Example 2, it is evident that when the calcination temperature decreases and the overall particle size of the lithium iron phosphate positive electrode material is relatively small, the particle size distribution S exceeds the acceptable range. Although the gravimetric capacity increases, the compaction density and the cycle retention rate decrease significantly, and the gas generation increases, which still cannot meet the requirements. By comparing Example 2 and Comparative Example 3, similarly, when the calcination temperature decreases and the overall particle size of the lithium iron phosphate positive electrode material is relatively small, the particle size distribution S exceeds the acceptable range, and the compaction density, the cycle retention rate, and the gas generation of the material all cannot meet the requirements.

The applicant declares that the above are merely specific embodiments of the present disclosure, but the scope of protection of the present disclosure is not limited thereto. Those skilled in the art should understand that any variations or substitutions easily conceived by those skilled in the art within the technical scope disclosed in the present disclosure fall within the scope of protection and disclosure of the present disclosure.

## Claims

1. A preparation method for lithium iron phosphate positive electrode material, comprising:

   (I) mixing an iron phosphate precursor, a lithium source, a dopant, a carbon source and a solvent to obtain a dispersion;
   (II) subjecting the dispersion to wet grinding to obtain an intermediate material; and
   (III) sequentially subjecting the intermediate material to a calcination treatment and a crushing treatment to obtain a lithium iron phosphate positive electrode material,

wherein a grinding particle size of the wet grinding is $D_n$, a temperature of the calcination treatment is T, and particle sizes corresponding to cumulative volume distribution percentages of the lithium iron phosphate positive material reaching 1%, 10%, 50%, and 99% are $D_1$, $D_{10}$, $D_{50}$, and $D_{99}$, respectively, satisfying the following formula:

$$S = \frac{T}{D_n} \sqrt{\frac{D_{50} \times D_{99}}{D_1 \times D_{10}}}$$

wherein, $11.0 \leq S \leq 13.3$.

2. The preparation method according to claim 1, wherein a molar ratio of the iron phosphate precursor to the lithium source is 1:(1-1.05);

optionally, the dopant comprises any one or a combination of at least two of $TiO_2$, $WO_3$, and MgO;
optionally, based on a total mass of the iron phosphate precursor, the lithium source, the dopant, and the carbon source, an addition amount of the dopant is 1,000 ppm-5,000 ppm;
optionally, the carbon source comprises glucose;
optionally, taking the total mass of the iron phosphate precursor, the lithium source, the dopant, and the carbon source as 100%, an addition amount of the carbon source is 10wt%-15wt%;
optionally, the solvent comprises water; and
optionally, a solid content of the dispersion is 30%-50%.

3. The preparation method according to claim 1 or 2, wherein the wet grinding comprises sand grinding; and optionally, the grinding particle size $D_n$ of the wet grinding is 400 nm-600 nm.

4. The preparation method according to any one of claims 1 to 3, wherein, in step (II), after the wet grinding is completed, the intermediate material is subjected to a drying treatment;

optionally, the drying treatment comprises spray drying;
optionally, a pressure of the spray drying is 0.1 MPa-0.5 MPa; and
optionally, a temperature of the spray drying is 140 °C-190 °C.

5. The preparation method according to any one of claims 1 to 4, wherein, the calcination treatment comprises: subjecting the intermediate material to microwave heating; and
optionally, after the calcination treatment is completed, subjecting the intermediate material to a cooling treatment.

6. The preparation method according to any one of claims 1 to 5, wherein, a temperature of the calcination treatment is 780 °C-850 °C;

Optionally, a duration of the calcination treatment is 8 h-12 h;
optionally, the calcination treatment of the intermediate material is performed under a protection of a protective atmosphere;
optionally, the protective atmosphere comprises nitrogen; and
optionally, a concentration of oxygen in the protective atmosphere is < 50 ppm.

7. The preparation method according to any one of claims 1 to 6, wherein, the crushing treatment comprises air jet milling;

optionally, a pressure of the air jet milling is 0.8 MPa-0.9 MPa;
optionally, a particle size $D_1$ of the lithium iron phosphate positive electrode material is 0.1 $\mu$m -0.3 $\mu$m, and not 0.3 $\mu$m;
optionally, a particle size $D_{10}$ of the lithium iron phosphate positive electrode material is 0.3 $\mu$m -0.5 $\mu$m;
optionally, a particle size $D_{50}$ of the lithium iron phosphate positive electrode material is 0.8 $\mu$m -1.2 $\mu$m; and
optionally, a particle size $D_{99}$ of the lithium iron phosphate positive electrode material is 5 $\mu$m -10 $\mu$m.

8. A positive material prepared by the preparation method according to any one of claims 1 to 7.

**9.** The positive material according to claim 8, wherein a compaction density of the positive electrode material is 2.1 g/cm$^3$-2.5 g/cm$^3$.

**10.** A battery, comprising a positive electrode comprising the positive electrode material according to claim 8 or 9.

## INTERNATIONAL SEARCH REPORT

| International application No. |
|---|
| **PCT/CN2024/093457** |

| A. | CLASSIFICATION OF SUBJECT MATTER |
|---|---|

C01B 25/45(2006.01)i; H01M 4/04(2006.01)i; H01M 4/58(2010.01)i; H01M 4/62(2006.01)i; H01M 10/0525(2010.01)i

According to International Patent Classification (IPC) or to both national classification and IPC

| B. | FIELDS SEARCHED |
|---|---|

Minimum documentation searched (classification system followed by classification symbols)

IPC: C01B 25/-, H01M 4/-,H01M 10/-

Documentation searched other than minimum documentation to the extent that such documents are included in the fields searched

Electronic data base consulted during the international search (name of data base and, where practicable, search terms used)

CNTXT, VEN, ENTXTC, CNKI, WEB OF SCIENCE: 磷酸铁锂, 磷酸铁, 正极材料, 掺杂剂, 研磨, 湿法, 溶剂, 粒度, 粒径, 分布, 煅烧, lithium iron phosphate, Li?FePO4, iron phosphate, FePO4, cathode material, dopant, milling, grinding, wet method, solvent, particle size, distribution, calcining, sintering, D50, D1, D10, D99

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117263157 A (LIBAI NEW MATERIAL TECHNOLOGY (JIANGSU) CO., LTD.) 22 December 2023 (2023-12-22) claims 1-10 | 1-10 |
| X | CN 112599767 A (HUBEI RT ADVANCED MATERIALS CO., LTD.) 02 April 2021 (2021-04-02) claims 1-10, and description, paragraph [0087], and embodiments 2 and 6 in table 2 | 1-10 |
| X | CN 107814372 A (SHENYANG GUOKE METAL NEW MATERIAL CO., LTD.) 20 March 2018 (2018-03-20) claims 1-10 | 1-10 |
| X | CN 115566160 A (HUBEI RT ADVANCED MATERIALS CO., LTD.) 03 January 2023 (2023-01-03) claims 1-10 | 1-10 |
| X | CN 115974031 A (BTR (TIANJIN) NANO-MATERIAL MANUFACTURING CO., LTD.) 18 April 2023 (2023-04-18) claims 1-10, and embodiment 1 | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 July 2024** | **08 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/093457**

**C. DOCUMENTS CONSIDERED TO BE RELEVANT**

| Category* | Citation of document, with indication, where appropriate, of the relevant passages | Relevant to claim No. |
|---|---|---|
| A | CN 115974041 A (LIBAI NEW MATERIAL TECHNOLOGY (JIANGSU) CO., LTD.) 18 April 2023 (2023-04-18) entire document | 1-10 |
| A | US 2023170481 A1 (BTR (TIANJIN) NANO-MATERIAL MANUFACTURING CO., LTD.) 01 June 2023 (2023-06-01) entire document | 1-10 |

Form PCT/ISA/210 (second sheet) (July 2022)

| INTERNATIONAL SEARCH REPORT<br>Information on patent family members | International application No.<br>**PCT/CN2024/093457** |
|---|---|

| Patent document<br>cited in search report | | | Publication date<br>(day/month/year) | Patent family member(s) | | | Publication date<br>(day/month/year) |
|---|---|---|---|---|---|---|---|
| CN | 117263157 | A | 22 December 2023 | None | | | |
| CN | 112599767 | A | 02 April 2021 | None | | | |
| CN | 107814372 | A | 20 March 2018 | None | | | |
| CN | 115566160 | A | 03 January 2023 | None | | | |
| CN | 115974031 | A | 18 April 2023 | None | | | |
| CN | 115974041 | A | 18 April 2023 | None | | | |
| US | 2023170481 | A1 | 01 June 2023 | WO | 2022171074 | A1 | 18 August 2022 |
| | | | | EP | 4119498 | A1 | 18 January 2023 |
| | | | | EP | 4119498 | A4 | 01 November 2023 |
| | | | | JP | 2023522670 | A | 31 May 2023 |
| | | | | JP | 7465369 | B2 | 10 April 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311263779
- CN 104766973 A
- CN 116002652 A